Europäisches Patentamt

(19) European Patent Office

Office européen des brevets

(11) Publication number: **0 472 427 A2**

## (12) EUROPEAN PATENT APPLICATION

(21) Application number: **91307714.5**

(22) Date of filing: **21.08.91**

(51) Int. Cl.⁵: **C04B 35/00,** B22F 1/00,
B22F 3/16, B22F 3/22

(30) Priority: **22.08.90 US 570739**

(43) Date of publication of application:
**26.02.92 Bulletin 92/09**

(84) Designated Contracting States:
**DE FR GB**

(71) Applicant: **UNION CARBIDE COATINGS
SERVICE TECHNOLOGY CORP.**
**39 Old Ridgebury Road**
**Danbury, CT 06817-0001 (US)**

(72) Inventor: **Montgomery, Lionel Clayton**
**571 Marygate Drive**
**Bay Village, Ohio 44140 (US)**

(74) Representative: **W.P. Thompson & Co.**
**Coopers Building, Church Street**
**Liverpool L1 3AB (GB)**

(54) Nonaqueous binder composition and its use in slip casting or cold forming.

(57)  A nonaqueous binder composition comprises a refractory material and a deflocculant composed of a resin composition of vinyl chloride and vinyl acetate dissolved in an organic solvent. The binder composition may be slip cast or cold formed into a low density article which is then sintered into a dense product.

EP 0 472 427 A2

The present invention relates to an organic liquid binder composition for slip casting of nonoxide ceramic refractory materials and for cold forming refractory shapes, from such compositions.

Slip casting and cold forming are well-known methods to form a desired shape from a powdered material.

In conventional slip-casting practice, the material to be cast is milled or otherwise processed into a finely divided powder of predetermined particle size generally from 1 to 5 microns. The finely divided material is then mixed with a liquid-suspending medium to form what is conventionally known as a slip which is poured into a suitable mould, e.g., a plaster of Paris mould. In the mould, the liquid suspending medium is drawn by capillary action into the body of the mould, and the remaining solids are deposited in coherent form. After drying, the shape may be removed from the mould and further processed into a final product.

For effective casting, a deflocculant should be included in the suspending medium to bind the different size particles into a uniform suspension so that the final product does not have a segregated structure. For non-oxide ceramic refractory materials such as, for example, borides, carbides, nitrides and silicides, the liquid suspending medium requires an organic vehicle, i.e. the suspending medium cannot be an aqueous slurry. A small amount of a low molecular weight polymeric cyclopentadiene has been used as the deflocculant of choice and is dissolved in an organic suspending medium selected from xylene, toluene, benzene, naphtha, and alcohol. The cyclopentadiene is generally added in a proportion of 5 to 12 percent by weight of the slip-suspending medium.

It has now been found possible to provide a nonaqueous binder composition containing a deflocculant for use in slip casing as a substitute for the conventional cyclopentadiene system or for cold forming. The nonaqueous binder composition of the present invention comprises a vinyl chloride and vinyl acetate resin composition dissolved in an organic solvent.

The present invention also provides a method of slip casting a powdered non-oxide refractory material to form a shaped dense refractory article of near theoretical density which comprises:

preparing a liquid slurry composed of the refractory material in particulate form and a deflocculant for suspending the refractory particles in solution with the deflocculant being composed of a nonaqueous vinyl chloride-vinyl acetate resin dissolved in an organic solvent;

slip casting the liquid slurry to form a low density article of predetermined shape; and

pressureless sintering the low density article to form a shaped high density article.

The present invention further provides a method of cold forming a powdered refractory material to form a shaped dense refractory article of near theoretical density which comprises:

preparing a liquid slurry composed of the refractory material in particulate form and a deflocculant for suspending the refractory particles in solution with the deflocculant being composed of a nonaqueous resin composition of vinyl chloride and vinyl acetate dissolved in an organic solvent;

drying the slurry;

milling the dried product;

cold pressing to form a low density product; and

pressureless sintering the low density product to form a high density article of near theoretical density.

The low density article usually has a density of 50 to 65% of the theoretical density while the high density or near theoretical density article usually has a density of 85 to 97% or more of the theoretical density.

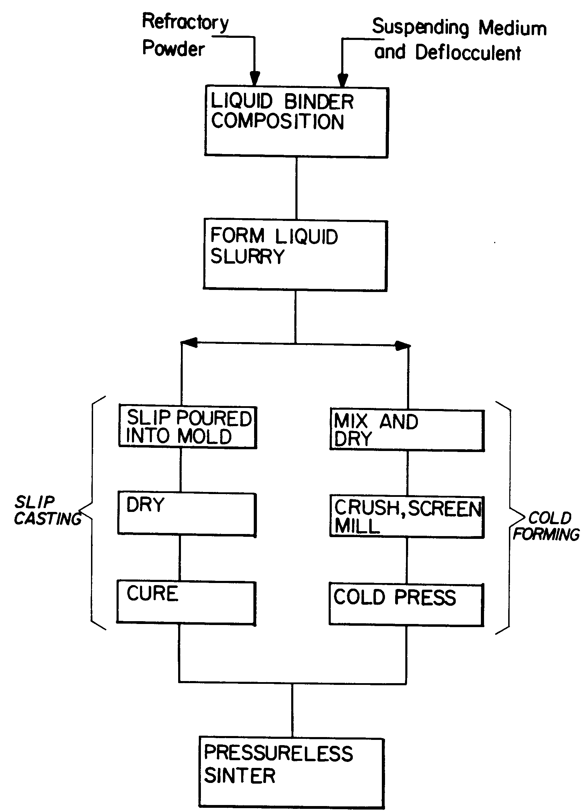

The present invention will now be further described with reference to, but in no manner limited to, the accompanying drawings, in which the single Figure is a flow diagram illustrating the sequence for slip casting or cold forming a refractory shape from a refractory powder using the suspending medium and deflocculant of the present invention.

A slip cast of a refractory material can be formed in accordance with the present invention into a complex solid and/or hollow green shape having a high density using a binder-deflocculant composition formed from a resinous composition of vinyl chloride and vinyl acetate dissolved in an organic solvent. The refractory material may be formed from a composition of any of the following taken alone or in combination: a metal boride such as, for example $CrB_2$, $ZrB_2$, or $TiB_2$; a refractor carbide such as, for example, WC, TiC, or $B_4C$; a nitride such as, for example, $Si_3N_4$ and AlN; a silicide such as, for example $TiSi_2$ or MoSi; and a refractory metal such as, for example, W, Mo, Ta or Cr.

A binder composition is prepared from a preselected refractory material composition based on the desired characteristics for the cast article. Thus if the article is to be used for the vapourization of aluminium, the refractory material composition would preferably be a blend of a metal boride and nitride such as, for example, AlN in a desired ratio to establish a given electrical resistivity. A grain growth inhibitor is preferably added into the powder blend. A preferred grain growth inhibitor is $CrB_2$ from 1 to 5% by weight. This boride enters into solid solution with the materials during sintering at high temperatures and acts as a grain growth inhibitor by decreasing the mobility of the grain boundaries.

The refractory powder composition is reduced to an average particle size of about 3 to 5 microns.

The finely divided powder is then suspended in a liquid suspending medium containing a resin of vinyl chloride and vinyl acetate dissolved in an organic solvent. The preferred composition is vinyl acetate/vinyl chloride containing 3 to 34% by weight vinyl acetate and 58 to 97% by weight vinyl chloride. The optimum ratio is 86% by weight vinyl chloride and 13% by weight vinyl acetate. The vinyl acetate/vinyl chloride composition is dissolved in an organic solvent, preferably an organic ketone, to form the liquid binder composition of the present invention. The particularly preferred organic ketone is methylethylketone (hereafter "MEK") although any conventional organic ketone may be used.

The preferred range for the refractory powder and liquid suspension medium forming the binder composition of the present invention is as follows:

```
Powder of refractory material  - 78.8-90 wt.%
Vinyl Acetate/Vinyl Chloride   - 0.5 to 2.2 wt.%
MEK                            - 9.5 to 19 wt.%
```

An example binder composition for a 34% by weight $TiB_2$, 63% by weight AlN, and 3% by weight $CrB_2$ refractory powder is as follows:

Powder - 82.6 wt.%
MEK - 15.7 wt.%
PVA - 1.70 wt.%

The binder composition is preferably ball-milled to deagglomerate the powder to form a smooth homogeneous liquid slurry which represents a well lubricated slip for slip casting.

The slip is then cast as follows:

a. The slip is poured into a shaped plaster of Paris mould. The liquid portion of the slip is drawn into the porous mould by capillary forces, and the solid powder particles are deposited on the surface of the plaster mould to form a coherent layer. When the layer reaches the desired thickness, that portion of the slip that is still liquid may be drained out of the mould. If desired, however, solid castings can be prepared.

b. The shape is air-dried in the mould until it can be handled without fracture. The time varies from one hour for small shapes, such as, for example 2.5 to 5.1 cm (one- to two-inch) diameter crucibles, to 24 hours for castings weighing several pounds.

c. The shapes are further dried outside the plaster mould in an oven at about 80°C to rid the structure of MEK and to cure the vinyl acetate/vinyl chloride binder system.

d. The cured shapes may be machined, lathed, sanded, etc., if necessary.

If, however, it is desired to fabricate refractory shapes by cold forming (isostatic, die pressing, etc.), the liquid slurry representing the slip can be dried, for example, in a mixer such as, for example, a Hobart, and the MEK vapourized out of the slip to produce a dried powder. The dried powder is micromilled to break up agglomerates created during the mixing and drying operation and then cold formed into shapes. The slip preparation process and the mixing and drying operation produce a refractory powder that is coated with the vinyl chloride-vinyl acetate resin. This coating imparts excellent lubricity to the powder and reduces the friction not only among the powder particles but also between the powder and the die wall when die pressing operations are carried out. The green density is normally higher when lubricated refractory particles are die pressed. In the following Example the green density was 4.84% higher when 3.2cm (1.25″) $\varnothing$ (diameter) compacts were cold pressed at $252 \times 10^3$ kPa (36,600 psi) compared to the green density of nonlubricated powder of the same composition.

## EXAMPLE I

| Powder | Wt. % | Grams |
|---|---|---|
| $TiB_2$ | 34 | 280.84 |
| AlN | 63 | 520.38 |
| $CrB_2$ | 3 | 24.78 |

Powder milled to give average particle size of 3.0 to 3.5 microns

Deflocculating Agent

17 grams Vinyl Acetate/Vinyl Chloride

Suspending Medium

MEK - 157 grams

Slurry formed by milling $TiB_2$-AlN-$CrB_2$ powder suspended in MEK Vinyl Chloride/Vinyl Acetate Binder Solution.

For Slip Casting

1. Slip poured into shaped plaster moulds to produce hollow or solid $TiB_2$-AlN-$CrB_2$ shapes.
2. Shape is dried and removed from mould.
3. Cured at about 80°C and, if necessary, machined.

For Cold Forming

1. Slip poured into mixer.
2. MEK is vapourized from slip composition.
3. Micromill dried powder to produce a uniform nonagglomerated powder.
4. Powder cold formed into shape by a pressing operation (die pressing, isostatic pressing, etc.).
5. Cured at about 80°C and, if necessary, machined.
The cured product, either slip cast or cold formed, may then be pressureless sintered in a $TiB_2$-AlN-$CrB_2$ powder pack within a graphite capsule with argon inlet and outlet. The operation is carried out between 1800 and 2200°C at a heat rate of about 400°/hour.

The fabricated refractory shapes following either the slip-casing or cold-forming operations as described, may be cured at about 80°C in air and machined, if necessary, and then pressureless sintered to increase their density. Pressureless sintering is preferably conducted in a powder pack of a refractory material similar to the fabricated shape in an inert atmosphere of, for example, argon. The sintering temperature is between 1800 and 2200°C with a hold time of approximately two hours and a heat rise of about 400°C/hour for 1.3cm (0.5″) thick green stock.

The following is an Example of a pressureless sintered article from a $TIB_2$-AlN-$CrB_2$ slip-cast green stock made in accordance with the present invention.

### EXAMPLE II

| | Slip Cast | Pressureless Sintering |
|---|---|---|
| Diameter | 1.247 | 1.065 |
| Length | 0.619 | 0.527 |
| Weight, gms | 35.83 | 24.26 |
| Volume, cc | 12.388 | 7.693 |
| Density, % Th. | 63.0 | 97.02 |

$H_2O$ Immersion Density % Theoretical- 97.45

## Claims

1. A nonaqueous binder composition for slip casting or cold forming non-oxide refractory material(s) which comprises a deflocculant composed of a vinyl chloride-vinyl acetate resin composition dissolved in an organic solvent.

2. A nonaqueous binder according to claim 1, wherein the organic solvent is an organic ketone.

3. A nonaqueous binder according to claim 2, wherein the organic ketone is methylethylketone.

4. A nonaqueous binder according to any of claims 1 to 3, wherein the refractory materials are selected from metal boride, refractory carbide, nitride, silicide and refractory metal.

5. A nonaqueous binder according to claim 4, wherein the blend of refractory particles comprises metal boride and a nitride.

6. A nonaqueous binder according to any of claims 1 to 5, wherein the resin composition comprises 3 to 34% by weight vinyl acetate and 58 to 97% by weight vinyl chloride.

7. A nonaqueous binder according to claim 6, wherein the resin composition contains 86% by weight vinyl chloride and 13% by weight vinyl acetate.

8. A method of slip casting a powdered non-oxide refractory material to form a shaped dense refractory article of near theoretical density which comprises:
   preparing a liquid slurry composed of the refractory material in particulate form and a deflocculant for suspending the refractory particles in solution with the deflocculant being composed of a nonaqueous vinyl chloride-vinyl acetate resin dissolved in an organic solvent;
   slip casting the liquid slurry to form a low density article of predetermined shape; and
   pressureless sintering the low density article to form a shaped high density article.

9. A method according to claim 8, wherein the liquid slurry is formed by blending the refractory particles and milling the blend to form predetermined average size particles; and combining the blend with the deflocculant.

10. A method according to claim 9, wherein the blend of refractory particles comprises a metal boride and a nitride.

11. A method of cold forming a powdered refractory material to form a shaped dense refractory article of near theoretical density which comprises;
   preparing a liquid slurry composed of the refractory material in particulate form and a deflocculant for suspending the refractory particles in solution with the deflocculant being composed of a nonaqueous resin composition of vinyl chloride and vinyl acetate dissolved in an organic solvent;
   drying the slurry;
   milling the dried product;
   cold pressing to form a low density product; and
   pressureless sintering the low density product to form a high density article of near theoretical density.

12. A method according to any of claims 8 to 11, wherein the resin composition is as claimed in claim 6 or 7, and/or the solvent is as defined in claim 2 or 3, and/or the refractory material is as claimed in claim 4 or 5.

Refractory
Powder

Suspending Medium
and Deflocculent

```
LIQUID BINDER
COMPOSITION
```

```
FORM LIQUID
SLURRY
```

*SLIP CASTING*

```
SLIP POURED
INTO MOLD
```

```
DRY
```

```
CURE
```

*COLD FORMING*

```
MIX AND
DRY
```

```
CRUSH, SCREEN
MILL
```

```
COLD PRESS
```

```
PRESSURELESS
SINTER
```